# EUROPEAN PATENT SPECIFICATION

(11) **EP 4 181 385 B1**
(45) Date of publication and mention of the grant of the patent: **26.03.2025**
(21) Application number: 22207379.3
(22) Date of filing: 15.11.2022
(51) Int. Cl.: H02N 15/00, B66C 1/00, B64D 17/38, B64D 1/22, H01F 6/04, B64D 1/12, B64U 101/66

(54) **A DELIVERY DEVICE, A DELIVERY ASSEMBLY AND AN AIRCRAFT**
ABGABEVORRICHTUNG, ABGABEANORDNUNG UND FLUGZEUG
DISPOSITIF DE DISTRIBUTION, ENSEMBLE DE DISTRIBUTION ET AÉRONEF

(30) Priority: 15.11.2021 CN 202122790774 U
(43) Date of publication of application: 17.05.2023
(73) Proprietor: Shanghai Autoflight Co., Ltd., Jinshan District Shanghai 201500 (CN)
(72) Inventor: TIAN, Yu, Shanghai, 201500 (CN)
(74) Representative: MERH-IP Matias Erny Reichl Hoffmann Patentanwälte PartG mbB

(56) References cited:
- EP-A1- 0 561 751
- EP-B1- 3 494 043
- CA-A1- 3 125 400
- US-A- 3 899 806

## Description

### Technical Field

The invention relates to the technical field of an aircraft delivery, especially a delivery device, a delivery assembly and an aircraft.

### Background Art

With the continuous development of aircraft technology, more and more industries and individuals use an aircraft for transporting and delivering an object to be delivered. An existing aircraft usually uses the delivery device by an electronic control to lift the object to be delivered during the flight and to delivery it when the destination is reached.

Therefore, some aircraft use mechanical delivery devices for automatic delivery. Mechanical dropping devices often include a mounting part and a biasing part. During the transport of the aircraft, the mounting part lifts up the object to be delivered, the biasing part is deformed under the gravity of the obj ect to be delivered at the same time. When the aircraft arrives at the designated location and the object to be delivered touches the ground, the force exerted by the object to be delivered on the biasing part disappears, and the biasing part resets so that the object to be delivered is separated from the mounting part, thus completing automatic decoupling.

However, the aircraft has not lifted the object to be delivered when just hooking the piece to be delivered to the mounting part, and the object to be delivered is still in contact with the ground. At the same time, the object to be delivered is easily separated from the mounting part under the reset effect of the biasing part, and an operator needs to always press the object to be delivered, so that the usage experience and the transportation efficiency of the aircraft are influenced.

CA 3 125 400 A1 relates to a UAV, which includes a chassis, a power supply mounted to the chassis, a control system operable to receive power from the power supply, at least one rotor operable to generate lift under control of the control system, and a winch mounted to the chassis. EP 3 494 043 B1 relates to methods and systems for detecting and correcting errors when jacking up and lowering a payload coupled to a tether of a winch system arranged on a UAV. US 3 899 806 A and EP 0 561 751 A1 relate to a hook with a safety latch.

### Summary of the Invention

The invention aims to provide a delivery device, which can realize the automatic delivery of the object, meanwhile it is easy to hook up the object to be delivered into the delivery device and ensures efficient transport of object to be delivered.

Therefore, the invention uses the following technical solutions:
A delivery device comprises:
a mounting part, the mounting part is provided with a mounting slot of which the opening extends upward and is configured to hook the object to be delivered,
a biasing part, the biasing part is provided on the mounting part and is made to deform under the gravity of the object to be delivered when it is lifted, which resets to drive the object to be delivered out of the mounting slot when the object to be delivered falls to the ground,
a blocking part, the blocking part is connected to the biasing part and is constructed to seal the opening of the mounting slot when the object to be delivered is hooked but not lifted and to open the opening of the mounting slot when the object to be delivered is lifted.

As a preferred solution of the delivery device, the first end of the blocking part can be connected to the biasing part. Either one of the mounting part and the second end of the blocking part can be provided with a clamping groove, and the other of them can be provided with a clamping part, which can be connected to the clamping groove so as to seal the mounting slot when the object to be delivered is hooked but not lifted. The biasing part can drive the blocking part to move so that the clamping part can be out of the clamping groove.

As a preferred solution of the delivery device, the first end of the blocking part can be pivotally connected with the biasing part.

As a preferred solution of the delivery device, the mounting part can be further provided with a sliding slot connected to the mounting slot, the biasing part can be set in the sliding slot.

As a preferred solution of the delivery device, the biasing part can include a connected reset member and a slider, the reset member can be located between the slider and the bottom of the sliding slot. The slider and the sliding slot can be matched glidingly and can touch the object to be delivered, the blocking part is connected to the slider.

As a preferred solution of the delivery device, the first end of the blocking part can be provided with two spaced apart lug parts, each of the lug parts can set a first connection hole. The slider can have a holding slot of which the two opposite side walls respectively can be provided with a second connection hole. The delivery device can further comprise a connecting shaft which can cross one of the second connection hole, two of the first connection holes and the other one of the second connection hole.

As a preferred solution of the delivery device, a first avoidance slot can be provided on the side wall of the sliding slot to avoid the blocking part when it slides with the slider.

As a preferred solution of the delivery device, the mounting part can include two shells arranged opposite, both the shells can form the sliding slot and the mounting slot.

The benefit of the invention:
The invention provides a delivery device, including a mounting part, a biasing part and a blocking part. The mounting part is provided with a mounting slot of which the opening extends upward. The object to be delivered can be hooked into the mounting slot. The biasing part is provided on the mounting part and is configured to deform under the gravity of the object to be delivered when it is lifted, which resets to drive the object to be delivered out of the mounting slot when the object to be delivered falls to the ground. The blocking part is connected to the biasing part and is configured to seal the opening of the mounting slot when the object to be delivered is not lifted and to open the opening of the mounting slot when the object to be delivered is lifted. The delivery device can realize the automatic dropping of the object to be delivered. And it can limit the position of object to be delivered which is prevented to fall out of the mounting slot when the object to be delivered is not lifted. The blocking part can open the opening of the mounting slot after lifting to enable the automatic unhooking of the object to be delivered after it falls to the ground, which makes the delivery device easy to use and efficient in transporting the to-be-dropped object.

Another purpose of the invention is to provide a delivery assembly which can realize the automatic delivery, meanwhile facilitate the hooking the object to be delivered and efficient in transporting.

Thus, the invention uses following technique solution:
A set of delivery assembly, an object to be delivered and the delivery device, the object to be delivered operably hangs on the object to be delivered.

The benefit of the invention:
The invention provides a set of delivery assembly, which delivery the object to be delivered by the delivery device. It can realize the automatic dropping of the object to be delivered. In the meantime, it is convenient to hook the object to be delivered, and efficient in transporting of the object to be delivered.

Another purpose of the invention is to provide an aircraft, which can realize the automatic dropping of the object to be delivered. Moreover, it is convenient to hook the object to be delivered, and efficient in transporting of the aircraft.

Hence, the invention adopts following technique solution:
An aircraft, includes an aircraft main body and the delivery device, the delivery device is connected to the aircraft main body.

The beneficial effect of the invention:
The invention provides an aircraft, which can drop the object to be delivered by the delivery device and realize the automatic dropping of the object to be delivered. Further, it is convenient to hook the object to be delivered, and efficient in transporting of the object to be delivered.

### Brief Description of the Figures

Fig. 1 is the structure diagram 1 of the delivery device provided by the embodiment 1 of the invention,
Fig. 2 is the structure diagram 2 of the delivery device provided by the embodiment 1 of the invention.

Legends in the figures:
1. Mounting part; 11. Mounting slot; 12. Sliding slot; 121. First avoidance slot; 122.Guide groove; 13. Second avoidance slot; 14. Clamping groove.
2. Biasing part; 21. Reset member; 22. Slider; 221. Holding slot; 222. Projection; 23. Guiding element.
3. Blocking part; 31. Clamping part; 32. Lug part.
4. Fastener.
100. Object to be delivered

### Detailed Description

In order to make clearer the purpose, technical scheme and advantages of the embodiment of the invention, the technical scheme in the embodiment of the invention is further described below in a clear and complete manner in combination with the figures in the embodiment of the invention. Obviously, the described embodiment is part of the embodiments of the invention, not all of them. Generally, the components of the embodiments of the invention described and shown in the appended figures here can be arranged and designed in various configurations.

### Embodiment 1

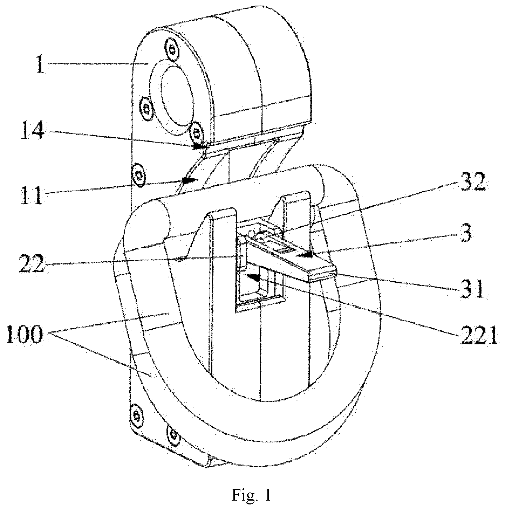

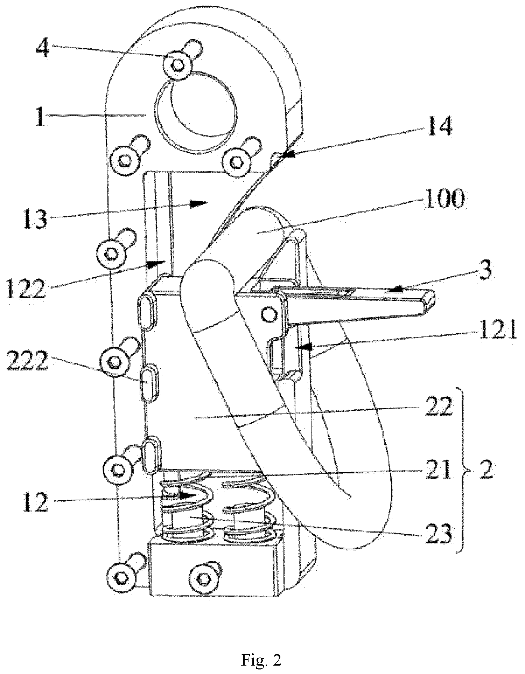

A delivery device of the embodiment is shown in the Fig.1 and Fig.2. The delivery device includes a mounting part 1, a biasing part 2 and a blocking part 3. The mounting part 1 is provided with a mounting slot 11 of which the opening extends upward and is configured to hook the object to be delivered 100. The biasing part 2 is provided on the mounting part 1 and is made to deform under the gravity of the object to be delivered 100 when it is lifted, which resets to drive the object to be delivered 100 out of the mounting slot 11 when the object to be delivered falls to the ground. The blocking part 3 is connected to the biasing part 2. It is constructed to seal the opening of the mounting slot 11 when the object to be delivered 100 is not lifted and to open the opening of the mounting slot 11 when the object to be delivered 100 is lifted. Before delivering the object to be delivered 100, hook the object to be delivered 100 to the mounting slot 11 firstly, the object to be delivered 100 is not lifted during this process. After the object to be delivered 100 closes to the outlet of the mounting slot 11, then the blocking part 3 seals the mounting slot 11 to prevent the object to be delivered 100 to fall out of the mounting slot 11. When the object to be delivered 100 is lifted, the object to be delivered 100 moves to the bottom of the mounting slot 11 and makes the biasing part 2 deform under the gravity of the object to be delivered 100. Meanwhile, while the blocking part 3 opens the opening of the mounting slot 11, the object to be delivered 100 touches the ground with the disappeared the force on the biasing part 2. The biasing part 2 drives the object to be delivered 100 out of the delivery device from the mounting slot 11. The delivery device can realize the automatic delivery of the object to be delivered 100. It can limit the position of object to be delivered 100 by the blocking part 3 when the object to be delivered 100 is not lifted, so that the object to be delivered 100 will be prevented to fall out of the mounting slot 11. It is no need for the operator to manually limit the position of the object to be delivered 100. The blocking part 3 also can open the opening of the mounting slot 11 after the object to be delivered 100 has been lifted so that it can prevent interfering with the automatic unhooking of the object to be delivered 100 after landing. The delivery device is easy to use and can improve the transportation efficiency of the object to be delivered 100.

It can be understood that the biasing part 2 can be connected or butted with the mounting part 1 and object to be delivered 100 respectively, which provides the object to be delivered 100 with a reset function when it lands.

Further, the included angle between the extending direction of the mounting slot 11 and the vertical direction is 15° -45°. On one hand, reliable transportation of the object to be delivered 100 can be ensured and prevents the object to be delivered 100 to be out of the mounting slot 11. On the other hand, when the object to be delivered 100 touches the ground, it can be smoothly separated from the mounting slot 11 under the reset function of the biasing part 2.

Specifically, the first end of the blocking part 3 is connected to the biasing part 2, either one of the mounting part 1 and the second end of the blocking part 3 is provided with a clamping groove 14, and the other of them is provided with a clamping portion 31.

When the object to be delivered 100 is not lifted, the clamping part 31 can be engaged with the clamping groove 14 to seal the mounting slot 11. When the object to be delivered 100 is lifted, the biasing part 2 can drive the blocking part 3 to move so that the clamping part 31 can be out of the clamping groove 14. When the object to be delivered 100 is not lifted, the deformation degree of the biasing part 2 is small. While the object to be delivered 100 is close to the outlet of the mounting, the clamping part 31 can be engaged with the clamping groove 14 to seal the opening of the mounting groove 11. It can prevent the object to be delivered 100 to be out of the mounting slot 11. When the object to be delivered 100 is lifted, the biasing part 2 is deformed to a large extent under the gravity of the object to be delivered 100. The biasing part 2 drives the blocking part to move, which make the clamping part 31 be out of the clamping groove 14. Then the opening of the mounting slot 11 could be opened.

In this embodiment, the mounting part 1 is provided with a clamping groove 14. The second end of the blocking part 3 sets the clamping part 31, which can conveniently clamp the second end of the stop 3 to the mounting part 1.

Further, the clamping groove 14 is arranged above the mounting slot 11 and the opening direction of the clamping groove 14 is downward, which can further facilitate the separation of the clamping part 31 from the clamping groove 14 after the object to be delivered 100 is lifted.

Optionally, the first end of the blocking part 3 is rotatably connected to the biasing part 2. When the object to be delivered 100 is not lifted, the blocking part 3 can rotate and be engaged with the clamping groove 14. When the object to be delivered 100 is lifted, the biasing part 2 drives the blocking part 3 to separate from the clamping groove 14. At the same time, under the action of the gravity of the blocking part 3, the second end of the blocking part 3 rotates downward, which does not affect the automatic delivery of the object to be delivered 100.

Certainly, the connection mode of the blocking part 3 and the biasing part 2 art not limited thereto, and in other embodiment, the blocking part 3 may further be a structure such as an elastic arm, the first end of the elastic arm is fixedly connected to the biasing part 2, and the second end of the elastic arm can be engaged with the clamping groove 14, which may be set according to actual usage requirements, which is not limited in this embodiment.

Below is the introduction for the biasing part 2.

In this embodiment, the mounting part 1 is further provided with a sliding groove 12 in communication with the mounting slot 11. The biasing part 2 is disposed in the sliding slot 12 and can abut against the object to be delivered 100, and by additionally providing the sliding slot 12 to accommodate the biasing part 2. The mounting slot 11 can provide a limiting effect on the object to be delivered 100, i.e., the object to be delivered 100 can be hooked to the bottom of the mounting slot 11, and the arrangement of the sliding slot 12 can further reduce the weight of the delivery device.

Of course, the arrangement position of the biasing part 2 is not limited thereto. In other embodiment, the biasing part 2 can also be arranged in the mounting slot 11, and the two ends of the biasing part 2 can abut against the bottom of the mounting groove 11 and the object to be delivered 100, respectively. It can be set according to actual requirements, which is not limited in this embodiment.

Further, the sliding slot 12 extends vertically. Comparing with the condition that the sliding slot 12 extends at an included angle with the horizontal direction, the sliding slot 12 with a larger size can be obtained when the size of the mounting part 1 is fixed, a large mounting space can be provided for the biasing part 2, and the weight of the delivery device is further reduced.

Optionally, as shown in Figure 2, the biasing part 2 includes a connected reset member 21 and a slider 22. The reset member 21 is located between the slider 22 and the bottom of the sliding slot 12. The slider 22 matches with the sliding slot 12 by a sliding method and can be butted with the object to be delivered 100. The blocking part 3 is connected to the slider 22. The slider 22 is connected with the object to be delivered 100, which can ensure the reliability and stability of the connection between the biasing part 2 and the object to be delivered 100, and ensure that object to be delivered 100 can automatically unhook when it lands. The side wall of the sliding slot 12 can be provided with a first avoidance slot 121 to avoid the blocking 3 when the blocking 3 slides with the slider 22.

Specifically, as shown in Figure 1, the first end of the blocking part 3 is provided with two spaced apart lug parts 32, each of the lug parts 32 sets a first connection hole. The slider 22 has a holding slot 221 of which the two opposite side walls respectively is provided with a second connection hole. The delivery device further comprises a connecting shaft, which crosses one of the second connection hole, two of the first connection holes and the other one of the second connection hole. Thus the rotary connection between the blocking part 3 and the slider 22 come true. Wherein, since two lug parts 32 are arranged, when installing the blocking part 3, the two lug parts can be installed on the slider 22 easily as they can be slightly close to each other under the action of external forces. In addition, the arrangement of the two lug parts is also conducive to reduce the overall weight of the delivery device.

Further, the reset member 21 could be a spring.

It can be understood that the reset member 21 has a preset stiffness, so that the reset member 21 can be compressed under the gravity of the object to be delivered 100 in during the transportation, and the object to be delivered 100 can be close to the bottom of the mounting slot 11 with good transportation reliability. When the object to be delivered 100 contacts the ground, the reset function of the reset member 21 can also make the object to be delivered 100 separate from the mounting slot 11, thus realizing automatic decoupling.

Further, the slider 22 is provided with a guide hole, and one end of the reset member 21 closed to the slider 22 is arranged in the guide hole and can be contacted to the top wall of the guide hole. On one hand, the reset member 21 can be limited to ensure the reset effect for the reset number 21, so that the object to be delivered 100 can automatically unhook. On the other hand, the connection between the reset member 21 and the slider 22 can be simply realized, reducing the number of parts used for connection, and the manufacturing cost of the dropping device is.

In order to further improve the guiding effect on the reset member 21, the biasing part 2 also includes a guiding element 23, which is arranged at the bottom of the mounting slot 11, and the end of the reset member 21 away from the slider 22 is set on the guiding element 23, which can further improve the guiding effect on the reset member 21 and thus further ensure the reset effect of the reset member 21. It is to be understood that the guiding element 23 does not affect the travel of the slider 22 along the vertical direction because the guiding element 23 can extend into the guide hole when the slider 22 moves down.

Specifically, the guiding element 23 comprises a threaded member and a guide member connected in sequence, the mounting part 1 is provided with a second threaded hole, the threaded member is threaded with the second threaded hole, the reset member 21 is sleeved on the guide member, The connection between the guiding element 23 and the mounting part 1 is achieved by means of the threaded fit, which facilitates the assembly of the delivery device and reduces the manufacturing and processing costs.

Furthermore, the number of the reset member 21 is at least two, and each reset member 21 is connected to the slider 22 to improve the stability of the slider 22 when sliding in the mounting slot 11, so as to further improve the contact stability and reliability of the slider 22 and the object to be delivered 100. In this embodiment, the number of reset member 21 is two, the two reset members 21 are spaced in the mounting slot 11, and the guide hole and guiding element 23 are respectively arranged in one-to-one correspondence with the reset member 21.

Moreover, as shown in Figure 2, one of the side wall of slider 22 and the side wall of the sliding slot 12 is provided with a projection 222, and the other of the side wall of the slider 22 and the side wall of the sliding slot 12 is provided with a guide groove 122. The projection 222 can slide and fit into the guide groove 122 to further guide the sliding of the slider 22, thereby increasing the sliding stability of the slider 22 and ensuring the butting effect of the object to be delivered 100.

In this embodiment, at least two projections 222 are arranged on both sides of the slider 22, and guide grooves 122 are arranged on the opposite two side walls of the sliding slot 12. Each projection 222 can slide into the corresponding guide groove 122 to further improve the guiding effect on the slider 22.

Moreover, a second avoidance slot 13 is provided on the upper side wall of the mounting slot 11 to avoid the sliding of the slider 22, so as to ensure the automatic decoupling effect of the object to be delivered 100, in addition to the arrangement of the second avoidance slot 13 is provided to further reduce the weight of the dropping device.

Moreover, the mounting part 1 comprises two shells set opposite to each other. The two shells are enclosed to form the sliding slot 12, the mounting slot 11 and the second avoidance slot 13. It can facilitate the processing and assembly of the biasing part 2.

Specifically, one of the housings is provided with at least a first threaded hole and the other housing is provided with a through-hole corresponding to the first threaded hole, and delivery device further comprises a fastener 4, which can pass through the through-hole and fit into the first threaded hole, so as to realize the connection of the two housings.

### Embodiment 2

Based on Embodiment 1, this embodiment provides a delivery assembly which comprises an object to be delivered 100 and a delivery device as described in Embodiment 1. The object to be delivered 100 is operably hooked onto the delivery device. The delivery assembly can realize automatic delivery of the object to be delivered 100, and also enables easy hooking of the object to be delivered 100 to the delivery device and efficient transportation of the object to be delivered 100.

Wherein, the object to be delivered 100 can be a cargo compartment, a rescue cabin or a cargo to be transported, and can be set according to actual usage. The present embodiment is not limited in this respect.

### Embodiment 3

Based on embodiment 2, this embodiment provides an aircraft, which includes the aircraft main body and the delivery device as described in embodiment 2. The aircraft enables the automatic delivery of the object to be delivered and also facilitates the hookup operation of the object to be delivered, the aircraft has a high transport efficiency.

Moreover, the number of delivery devices may be at least two, each of which is connected to the aircraft main body to increase the transport capacity of the aircraft and extend the range of usage of the aircraft.

It could be understood each delivery device can be used to lift or drop an object to be delivered 100, and each delivery device can also be used to lift or drop at least two objects to be delivered 100. It can be arranged according to the actual transport needs. This is not limited by this example.

In the description of this specification, it should be noted that the terms "center", "top", "bottom", "left", "right", "vertical", "horizontal", "inside", "outside" and other indicating orientations or positional relationships are based on the orientations or positional relationships shown in the drawings, only to facilitate the description of this embodiment and simplified description, rather than indicating or implying that the device or structure referred to must have a specific orientation, the structure by a special operated or in a specific orientation, so it cannot be understood as a limitation to the utility model. In addition, the terms "first" and "second" are only used to describe the purpose and cannot be understood as indicating or implying the importance level. The terms "first position" and "second position" are two different positions.

In the description of this specification, referring to the description of the terms "one embodiment", "example" and the like, it means that the specific features, structures, material or features described in combination with this embodiment or example are included in at least one embodiment or example of this utility model. In this specification, the schematic expressions of the above terms do not necessarily refer to the same embodiment or examples.

Unless otherwise specified regulation and defined limitation, the terms "installation", "communication", "connection" and "fixed" shall be understood broadly, for example, they can be fixed connections or removable connections; It can be mechanical connection or electrical connection It can be directly connected or indirectly connected through intermediate media. It can be the internal connection of two components or the interaction between two components. For ordinary technicians in the field, the specific meaning of the above terms in the invention can be understood according to the specific case.

Note that the above is only the exemplary embodiment of the invention and the applied technical principle. Those skilled in the art will understand that the invention is not limited to the specific embodiment described here. Those skilled in the art can make various obvious changes without departing from the protection scope of the invention. Therefore, the breadth and scope of the invention is determined by the scope of the appended claims.

## Claims

1. A delivery device, which comprises:
a mounting part (1), is provided with a mounting slot (11) of which an opening extends upward and is configured to hook an object to be delivered (100),
a biasing part (2), is provided on the mounting part (1) and is made to deform under the gravity of the object to be delivered (100) when it is lifted, which resets to drive the object to be delivered (100) out of the mounting slot (11) when the object to be delivered (100) falls to the ground, and **characterized by**
a blocking part (3), which is connected to the biasing part (2) and is constructed to seal the opening of the mounting slot (11) when the object to be delivered (100) is hooked but not lifted and to open the opening of the mounting slot (11) when the object to be delivered (100) is lifted.

2. The delivery device according to claim 1, wherein a first end of the blocking part (3) is connected to the biasing part (2),
wherein one of the mounting part (1) and a second end of the blocking part (3) is provided with a clamping groove (14), and the other is provided with a clamping part (31), which is configured to be connected to the clamping groove (14) so as to seal the mounting slot (11) when the object to be delivered (100) is hooked but not lifted, and wherein the biasing part (2) is configured to drive the blocking part (3) to move so that the clamping part (31) is separated from the clamping groove (14).

3. The delivery device according to claim 2, wherein the first end of the blocking part (3) is pivotally connected with the biasing part (2).

4. The delivery device according to any of claims 2 or 3, wherein the mounting part (1) is further provided with a sliding slot (12) connected to the mounting slot (11), the biasing part (2) sets in the sliding slot (12).

5. The delivery device according to claim 4, wherein the biasing
part (2) includes a connected reset member (21) and a slider (22), the reset member (21) is located between the slider (22) and the bottom of the sliding slot (12),
wherein the slider (22) and the sliding slot (12) are matched glidingly and are configured to touch the object to be delivered (100), the blocking part (3) is connected to the slider (22).

6. The delivery device according to claim 5, wherein the first end of the blocking part (3) is provided with two spaced apart lug parts (32), each of the lug parts (32) sets a first connection hole,
wherein the slider (22) has a holding slot (221) of which the two opposite side walls respectively is provided with a second connection hole, and
wherein the delivery device further comprises a connecting shaft which crosses one of the second connection hole, two of the first connection holes and the other one of the second connection hole.

7. The delivery device according to claim 5, wherein a first avoidance slot (121) is provided on the side wall of the sliding slot (12) to avoid the blocking part (3) when it slides with the slider (22).

8. The delivery device according to claim 4, wherein the mounting part (1) includes two shells arranged opposite, both the shells form the sliding slot (12) and the mounting slot (11).

9. A delivery assembly, wherein it comprises the delivery device and the object to be delivered (100) according to any one of claims 1-8, the object to be delivered (100) is configured to be operatively hung on the delivery device.

10. An aircraft, which comprises an aircraft main body and the delivery assembly according to claim 9, the delivery device is connected to the aircraft main body.

## Patentansprüche

1. Ausliefervorrichtung, die Folgendes umfasst:
eine Befestigungskomponente (1), die mit einem Befestigungsschlitz (11) versehen ist, von dem sich eine Öffnung nach oben erstreckt, und die konfiguriert ist, einen auszuliefernden Gegenstand (100) einzuhaken,
eine Vorbelastungskomponente (2), die an der Befestigungskomponente (1) vorgesehen ist und ausgelegt ist, sich unter der Schwerkraft des auszuliefernden Gegenstands (100) zu verformen, wenn er angehoben wird, und die sich zurückstellt, um den auszuliefernden Gegenstand (100) aus dem Befestigungsschlitz (11) zu drängen, wenn der auszuliefernde Gegenstand (100) auf den Boden fällt, und
**gekennzeichnet durch**
eine Sperrkomponente (3), die mit der Vorbelastungskomponente (2) verbunden ist und konstruiert ist, die Öffnung des Befestigungsschlitzes (11) zu verschließen, wenn der auszuliefernde Gegenstand (100) eingehakt, jedoch nicht angehoben ist, und die Öffnung des Befestigungsschlitzes (11) zu öffnen, wenn der auszuliefernde Gegenstand (100) angehoben wird.

2. Ausliefervorrichtung nach Anspruch 1,
wobei ein erstes Ende der Sperrkomponente (3) mit der Vorbelastungskomponente (2) verbunden ist,
wobei entweder die Befestigungskomponente (1) oder ein zweites Ende der Sperrkomponente (3) mit einer Klemmnut (14) versehen ist und das jeweils andere mit einer Klemmkomponente (31) versehen ist, die konfiguriert ist, mit der Klemmnut (14) verbunden zu sein, um den Befestigungsschlitz (11) zu verschließen, wenn der auszuliefernde Gegenstand (100) eingehakt, jedoch nicht angehoben ist, und wobei die Vorbelastungskomponente (2) konfiguriert ist, die Sperrkomponente (3) zu drängen, damit sie sich bewegt, derart, dass die Klemmkomponente (31) von der Klemmnut (14) getrennt wird.

3. Ausliefervorrichtung nach Anspruch 2, wobei das erste Ende der Sperrkomponente (3) mit der Vorbelastungskomponente (2) schwenkbar verbunden ist.

4. Ausliefervorrichtung nach einem der Ansprüche 2 oder 3, wobei die Befestigungskomponente (1) ferner mit einem Gleitschlitz (12) versehen ist, der mit dem Befestigungsschlitz (11) verbunden ist, wobei die Vorbelastungskomponente (2) in den Gleitschlitz (12) eintritt.

5. Ausliefervorrichtung nach Anspruch 4,
wobei die Vorbelastungskomponente (2) ein verbundenes Rückstellelement (21) und ein Gleitelement (22) enthält, wobei das Rückstellelement (21) zwischen dem Gleitelement (22) und dem Boden des Gleitschlitzes (12) angeordnet ist,
wobei das Gleitelement (22) und der Gleitschlitz (12) gleitend aufeinander abgestimmt sind und konfiguriert sind, den auszuliefernden Gegenstand (100) zu berühren, wobei die Sperrkomponente (3) mit dem Gleitelement (22) verbunden ist.

6. Ausliefervorrichtung nach Anspruch 5,
wobei das erste Ende der Sperrkomponente (3) mit zwei beabstandeten Ösenkomponenten (32) versehen ist, wobei jede der Ösenkomponenten (32) ein erstes Verbindungsloch einstellt,
wobei das Gleitelement (22) einen Halteschlitz (221) aufweist, dessen zwei gegenüberliegende Seitenwände jeweils mit einem zweiten Verbindungsloch versehen sind, und
wobei die Ausliefervorrichtung ferner eine Verbindungswelle umfasst, die durch eines der zweiten Verbindungslöcher, zwei der ersten Verbindungslöcher und das andere der zweiten Verbindungslöcher verläuft.

7. Ausliefervorrichtung nach Anspruch 5, wobei ein erster Begrenzungsschlitz (121) auf der Seitenwand des Gleitschlitzes (12) vorgesehen ist, um die Sperrkomponente (3) zu begrenzen, wenn sie mit dem Gleitelement (22) gleitet.

8. Ausliefervorrichtung nach Anspruch 4, wobei die Befestigungskomponente (1) zwei Schalen enthält, die gegenüberliegend angeordnet sind, wobei die beiden Schalen den Gleitschlitz (12) und den Befestigungsschlitz (11) bilden.

9. Auslieferanordnung, wobei sie die Ausliefervorrichtung und den auszuliefernden Gegenstand (100) nach einem der Ansprüche 1-8 umfasst, wobei der auszuliefernde Gegenstand (100) konfiguriert ist, betriebstechnisch auf der Ausliefervorrichtung aufgehängt zu sein.

10. Luftfahrzeug, das einen Luftfahrzeug-Hauptkörper und die Auslieferanordnung nach Anspruch 9 umfasst, wobei die Ausliefervorrichtung mit dem Luftfahrzeug-Hauptkörper verbunden ist.

## Revendications

1. Dispositif de livraison qui comprend :
une partie de montage (1), dotée d'une fente de montage (11) dont une ouverture s'étend vers le haut et configurée pour accrocher un objet à livrer (100),
une partie de sollicitation (2), prévue sur la partie de montage (1) et réalisée pour se déformer sous l'effet de gravité de l'objet à livrer (100) quand il est soulevé, qui se réinitialise pour amener l'objet à livrer (100) à sortir de la fente de montage (11) quand l'objet à livrer (100) tombe sur le sol, et
une partie de blocage (3), qui est connectée à la partie de sollicitation (2) et qui est construite pour fermer l'ouverture de la fente de montage (11) quand l'objet à livrer (100) est accroché mais n'est pas soulevé, et pour ouvrir l'ouverture de la fente de montage (11) quand l'objet à délivrer (100) est soulevé.

2. Dispositif de livraison selon la revendication 1, dans lequel
une première extrémité de la partie de blocage (3) est connectée à la partie de sollicitation (2),
dans lequel l'une de la partie de montage (1) et d'une seconde extrémité de la partie de blocage (3) est dotée d'une rainure de serrage (14), et l'autre est dotée d'une partie de serrage (31), qui est configurée pour être connectée à la rainure de serrage (14) de manière à fermer la fente de montage (11) quand l'objet à livrer (100) est accroché mais n'est pas soulevé, et
dans lequel la partie de sollicitation (2) est configurée pour amener la partie de blocage (3) à se déplacer de telle sorte que la partie de serrage (31) est séparée de la rainure de serrage (14).

3. Dispositif de livraison selon la revendication 2, dans lequel
la première extrémité de la partie de blocage (3) est connectée de manière pivotante à la partie de sollicitation (2).

4. Dispositif de livraison selon l'une quelconque des revendications 2 ou 3, dans lequel
la partie de montage (1) est en outre dotée d'une fente de coulissement (12) connectée à la fente de montage (11), la partie de sollicitation (2) étant définie dans la fente de coulissement (12).

5. Dispositif de livraison selon la revendication 4, dans lequel
la partie de sollicitation (2) inclut un élément de réinitialisation connecté (21) et un coulisseau (22), l'élément de réinitialisation (21) étant situé entre le coulisseau (22) et le fond de la fente de coulissement (12),
dans lequel le coulisseau (22) et la fente de coulissement (12) sont accouplés par glissement et sont configurés pour toucher l'objet à livrer (100), la partie de blocage (3) étant connectée au coulisseau (22).

6. Dispositif de livraison selon la revendication 5, dans lequel
la première extrémité de la partie de blocage (3) est dotée de deux parties formant tenons espacées (32), chacune des parties formant tenons (32) définissant un premier trou de connexion,
dans lequel le coulisseau (22) présente une fente de retenue (221) dont les deux parois latérales opposées sont dotées respectivement d'un second trou de connexion, et
dans lequel le dispositif de livraison comprend en outre une tige de connexion qui croise l'un du second trou de connexion, deux des premiers trous de connexion et l'autre du second trou de connexion.

7. Dispositif de livraison selon la revendication 5, dans lequel
une première fente d'évidement (121) est prévue sur la paroi latérale de la fente de coulissement (12) pour éviter la partie de blocage (3) quand elle coulisse avec le coulisseau (22).

8. Dispositif de livraison selon la revendication 4, dans lequel
la partie de montage (1) inclut deux coques agencées à l'opposé, les deux coques formant la fente de coulissement (12) et la fente de montage (11).

9. Assemblage de livraison, dans lequel
il comprend le dispositif de livraison et l'objet à livrer (100) selon l'une quelconque des revendications 1 à 8, l'objet à livrer (100) étant configuré pour être suspendu de manière fonctionnelle sur le dispositif de livraison.

10. Aéronef, qui comprend un corps principal d'aéronef et l'assemblage de livraison selon la revendication 9, le dispositif de livraison étant connecté au corps principal d'aéronef.
